**Europäisches Patentamt**

**European Patent Office**

**Office européen des brevets**

(11) Numéro de publication : **0 287 418 B1**

(12) **FASCICULE DE BREVET EUROPEEN**

(45) Date de publication du fascicule du brevet :
03.07.91 Bulletin 91/27

(51) Int. Cl.⁵ : **C09C 1/30, C01B 33/193, C09C 3/12**

(21) Numéro de dépôt : **88400746.9**

(22) Date de dépôt : **28.03.88**

(54) **Silice de précipitation hydrophobe, son procédé de préparation et son application au renforcement des élastomères silicones.**

(30) Priorité : **13.04.87 FR 8705199**

(43) Date de publication de la demande :
**19.10.88 Bulletin 88/42**

(45) Mention de la délivrance du brevet :
**03.07.91 Bulletin 91/27**

(84) Etats contractants désignés :
**AT BE CH DE ES FR GB GR IT LI LU NL SE**

(56) Documents cités :
**EP-A- 0 031 288**
**FR-A- 2 305 390**
**FR-A- 2 356 596**

(73) Titulaire : **RHONE-POULENC CHIMIE**
**25, quai Paul Doumer**
**F-92408 Courbevoie Cédex (FR)**

(72) Inventeur : **Parmentier, François**
**12, rue Pierre Robin**
**F-69007 Lyon (FR)**
Inventeur : **Persello, Jacques**
**14, Chemin de Calice 310 - La Boisse**
**F-01120 Montluel (FR)**

(74) Mandataire : **Dubruc, Philippe et al**
**RHONE-POULENC INTERSERVICES Service**
**Brevets Chimie 25, quai Paul-Doumer**
**F-92408 Courbevoie Cédex (FR)**

## Description

La présente invention concerne une nouvelle silice de précipitation hydrophobe, un procédé de préparation de cette silice, ainsi que son application au renforcement des élastomères silicones.

On sait que l'on utilise les silices de combustion notamment comme charge renforçante dans les compositions organopolysiloxaniques durcissables. Les silices de combustion ont toutefois l'inconvénient de présenter un prix élevé.

Depuis de nombreuses années, on cherche donc à remplacer au moins partiellement ces silices de combustion par des silices de précipitation d'un prix moindre. On a proposé divers procédés de préparation de silices de précipitation, procédés complexes selon lesquels on règle durant la préparation la température, les concentrations en réactifs, la valeur du pH... (Brevet français FR-A-1 352 354).

On a cherché par ailleurs à améliorer les qualités d'agent de renforcement des silices de précipitation pour les applications silicones en rendant les silices hydrophobes par un traitement de surface approprié (emploi par exemple de silane ou de silazane). Des silices hydrophiles rendues hydrophobes par un tel traitement et utilisables pour les applications silicones sont par exemple décrites dans le brevet français FR-A-2.356.596.

Ces silices de précipitation peuvent présenter des propriétés intéressantes, toutefois elles peuvent s'avérer encore insuffisantes en ce qui concerne notamment leurs propriétés diélectriques, propriétés importantes dans des applications plus particulières telles que la câblerie.

D'une manière générale enfin, ces silices posent des problèmes quant à leur incorporation dans les silicones. En effet, cette incorporation se fait dans des malaxeurs avec faible cisaillement. Pour que l'introduction de la silice dans la pâte de silicone se fasse correctement, il est nécessaire que cette silice présente une densité suffisante.

D'autre part, il est intéressant de pouvoir disposer d'un produit pouvant être manipulé facilement ce qui implique dans le cas présent une bonne coulabilité.

L'objet de l'invention est une silice hydrophobe ayant des caractéristiques telles qu'elle puisse être très facilement utilisée pour le renforcement des silicones.

Un second objet de l'invention est la mise au point d'un procédé simple et économique de préparation d'une telle silice. Dans ce but, la silice de précipitation hydrophobe de l'invention présente les caractéristiques suivantes :

Densité : au moins 0,15,
Mouillabilité à l'eau : au moins 20%,
Reprise en eau : au plus 5%.

ladite silice se présentant sous forme de billes sensiblement sphériques et plus particulièrement de taille moyenne d'au moins 0,08 mm.

Par ailleurs, le procédé de fabrication d'une silice selon l'invention est caractérisé en ce qu'on met en présence et on mélange une suspension de silice, un agent d'hydrophobisation et un solvant organique, ce par quoi on obtient une phase liquide et la silice sous forme de bille, puis on sépare la phase liquide et la silice ainsi formée et éventuellement on lave et on sèche la silice.

La silice selon l'invention, grâce à sa densité et à sa présentation sous forme de billes, s'incorpore particulièrement bien aux silicones. Elle constitue ainsi une charge pour silicones aux propriétés intéressantes.

L'invention, ainsi que d'autres caractéristiques de celle-ci seront mieux comprises à la lecture de la description et des exemples concrets mais non limitatifs qui vont suivre.

Les différentes caractéristiques de la silice de l'invention vont maintenant être décrites.

Cette silice présente tout d'abord une densité d'au moins 0,15. Il s'agit là de la densité à l'état tassé selon la norme AFNOR N° 30100.

Selon différents modes de réalisation, cette densité peut être d'au moins 0,2, éventuellement d'au moins 0,3 et est plus particulièrement comprise entre 0,2 et 0,4.

La silice de l'invention a en outre une mouillabilité à l'eau d'au moins 20%, plus précisément d'au moins 30% et notamment comprise entre 40 et 80%.

Cette mouillabilité à l'eau ou indice d'hydrophobisation est déterminée par le volume V de méthanol qu'il est nécessaire d'ajouter à un mélange constitué de 50 ml d'eau et 200 mg de $SiO_2$ pour former une suspension homogène. La mouillabilité ou indice d'hydrophobisation I est exprimé par la formule :

$$I = \frac{V}{V + 50} \times 100$$

2

La silice de l'invention présente par ailleurs une reprise en eau d'au plus 5% et plus particulièrement d'au plus 3%. Elle peut être par exemple comprise entre 1,5 et 3%.

Cette reprise en eau représente la quantité d'eau adsorbée par un échantillon de silice sous une humidité relative donnée.

Dans le cas présent la reprise en eau a été mesurée de la façon suivante :

Dans un premier temps l'échantillon subit une désorption à 120°C sous débit d'azote jusqu'à poids constant. Puis il est refroidi sous courant d'azote sec à 23°C. On fait ensuite passer sur l'échantillon de l'azote sec saturé en vapeur d'eau dans des conditions telles que la température de l'échantillon est toujours 23°C et l'humidité relative au niveau de l'échantillon de 64%. On mesure la reprise en poids de l'échantillon en pourcentage par rapport au produit sec.

Une autre caractéristique importante de cette silice est sa présentation. Elle se présente en effet sous forme de billes sensiblement sphériques dont la taille moyenne (taille moyenne en poids) est généralement d'au moins 0,08 mm. Cette taille peut être plus particulièrement d'au moins 0,2 mm et comprise entre 0,2 et 2 mm par exemple. Cette présentation donne une coulabilité excellente au produit de l'invention.

De préférence, la silice de l'invention présente aussi une teneur en sodium résiduel d'au plus 1500 ppm plus particulièrement d'au plus 500 ppm. Cette teneur correspond au sodium total, elle est mesurée par spectroémission de flamme après dissolution de la silice par l'acide fluorhydrique.

La silice de l'invention peut présenter une surface BET variant dans un domaine large et généralement d'au moins 50 m²/g. Plus précisément, elle peut être comprise entre 50 et 350 m²/g et encore plus particulièrement entre 100 et 300 m²/g.

Cette surface est déterminée selon la méthode de BRUNAUER-EMMET-TELLER décrite dans the Journal of the American Chemical Society vol 60 p 309 February 1938 et selon la norme NFT 45007 (5.11.1).

La surface CTAB de la silice peut elle aussi varier dans de larges limites. Elle est généralement d'au moins 40 m²/g. Elle peut être plus particulièrement comprise entre 40 et 320 m²/g et notamment entre 80 et 270 m²/g.

Cette surface CTAB est la surface externe déterminée par absorption de bromure de céthyl triméthyl ammonium à pH 9 selon la méthode exposée par JAY, JANSEN et G. KRAUS dans Rubber Chemistry and Technology 44 (1971) – p 1287-1296.

Le procédé de préparation des silices de l'invention va maintenant être décrit.

Le procédé part d'une suspension aqueuse de silice qui peut être obtenue d'une manière quelconque.

Il peut s'agir par exemple de la suspension obtenue par précipitation d'une solution d'un silicate alcalin neutralisée par un agent acidifiant tel que l'acide sulfurique ou le gaz carbonique. Il pourrait aussi s'agir d'un gateau de filtration de silice repulpé.

Il est à noter que pour le procédé de l'invention, la teneur en matière sèche de la suspension n'est pas critique.

Par ailleurs, le procédé de l'invention met en oeuvre un agent d'hydrophobisation.

On peut utiliser tout agent connu comme étant capable de rendre hydrophobe la surface de la silice. On peut se référer à ce sujet à "Encyclopedia of Chemical Technology", 3ème édition, volume 20, page 962 et suivantes.

On peut ainsi employer des composés organosiliciques comme ceux de formule générale : $(R_3 Si)_a Z$, dans laquelle R signifie des restes d'hydrocarbures, identiques ou différents, univalents, éventuellement substitués et/ou des polymères, a est égal à 1 ou 2 et Z est un halogène, de l'hydrogène ou un reste de la forme –OH, –OR, –NRX, –ONR$_2$, –SR, –OOCR, –O–, –N(X)– ou –S–. R a la signification ci-dessus et X est de l'hydrogène ou possède la même signification que R. On peut citer comme exemples de tels composés, le triméthylsilane, le triméthylchlorosilane, le triméthyléthoxysilane, les composés triorganosilylaminoxy, tels que le diéthylaminoxytriméthylsilane et la diéthylaminoxydiméthylphénylsilane, les composés du type triorganosilylmercaptans, triorganosilylacylates, les triorganosilylamines.

Comme autres composés on pourra aussi choisir ceux appartenant au groupe des chlorosilanes ou alcoxysilanes tels que par exemple le diméthyldichlorosilane, le diméthyldiéthoxysilane, le diméthyldiméthoxysilane.

On peut aussi utiliser des éléments du groupe des disilazanes, tel que l'hexaméthyldisilazane, le 1,3-diphénylhexaméthyldisilazane.

Bien entendu, il est tout à fait possible d'utiliser conjointement plusieurs agents d'hydrophobisation.

Selon une variante particulière du procédé de l'invention, on peut mettre en oeuvre comme agent d'hydrophobisation au moins un de ceux choisis dans le groupe des alkylchlorosilanes notamment le diméthyldichlorosilane et la combinaison diméthyldichlorosilane, triméthylchlorosilane, méthyltrichlorosilane.

Enfin, le procédé de l'invention met en oeuvre un solvant organique non miscible à l'eau.

Ce solvant pourra être de préférence choisi dans le groupe comprenant les esters et les cétones et en particulier les dérivés aliphatiques de ceux-ci.

En ce qui concerne les esters aliphatiques, on peut utiliser en particulier les formiates, les acétates, les

EP 0 287 418 B1

propionates, les butyrates, les oxalates, les phosphates et lactates.

On préfère les acétates, notamment les acétates d'éthyle, de diisopropyle et de butyle.

Les cétones aliphatiques peuvent être avantageusement choisies pour la mise en oeuvre du procédé de l'invention. On pourra citer tout particulièrement la méthyl-isobutyl cétone, l'éthyl-isopropyl cétone.

Eventuellement pourraient aussi être utilisées comme solvant organique les amines, notamment les amines primaires ou secondaires, ou leur mélange avec un diluant organique du type par exemple hydrocarbure aliphatique ou solvent chloré.

D'une manière préférée, la mise en présence de la suspension de silice, de l'agent d'hydrophobisation et du solvant se fait de la manière suivante :

Dans un premier temps, on met en présence et on mélange la suspension de silice et l'agent d'hydrophobisation. La durée de cette première étape peut varier dans de larges limites. A titre d'exemple, elle est de une à deux heures.

Il est avantageux lors de cette étape de maintenir constant le pH du mélange, ce qui permet d'éviter le dégagement de gaz gênant lors de l'utilisation comme agent d'hydrophobisation de dérivés halogénés.

A la fin de cette première étape, on peut prévoir éventuellement un mûrissement du milieu pendant au moins quinze minutes.

Ensuite, dans un deuxième temps, on ajoute le solvant au milieu. L'introduction du solvant se fait sous agitation.

La quantité d'agent d'hydrophobisation à utiliser varie en fonction du type de silice présente dans la suspension de départ et notamment en fonction de sa surface (surface BET). Cette quantité est d'autant plus grande que cette surface est importante. Cette quantité est aussi fonction de l'application qui sera faite de la silice hydrophobe obtenue.

La quantité du solvant est aussi fonction de la silice de départ et de son traitement. Cette quantité est généralement telle que le rapport volume de solvant exprimé en litre/poids de silice en kg (calculé par rapport à $SiO_2$ présent dans la suspension) varie entre 1 et 5, de préférence 1,5 et 4,5.

Il existe une quantité minimale de solvant en deçà de laquelle il n'y a pas agglomération de la silice. Il existe aussi une quantité maximale au delà de laquelle il y a collage des granulés formés et obtention d'une masse compacte de silice.

Comme cela vient d'être indiqué, la mise en présence de la suspension de silice, de l'agent d'hydrophobisation, et du solvant provoque une granulation de la silice.

La température à laquelle se fait le mélange pourra varier généralement entre l'ambiante et 80°C. Cette température sera souvent celle à laquelle la suspension de silice de départ a été obtenue.

Une fois l'agitation du milieu réactionnel terminée, on obtient donc une phase liquide et la silice sous forme de billes.

La séparation de la silice et de la phase liquide obtenues peut se faire par tout moyen connu, par exemple filtre à bande ou centrifugeuse.

Cette séparation s'avère se faire très facilement. Il s'agit là d'un des avantages du procédé de l'invention.

A la suite de cette séparation, on obtient une silice qui correspond notamment au type décrit ci-dessus.

Cette silice peut contenir des sels comme par exemple du sulfate de sodium dans le cas des suspensions de silice obtenues par neutralisation des silicates alcalins par l'acide sulfurique.

Une autre étape du procédé pourra être en conséquence une étape de lavage destinée à éliminer ces impuretés mentionnées ci-dessus.

Ce lavage peut être fait avec de l'eau désionisée saturée ou non en solvant. Le lavage, tout comme la filtration, se fait très facilement, par exemple directement sur le gâteau de filtration. On peut ainsi arriver à des teneurs en sodium résiduel très faibles.

Le produit obtenu peut ensuite être séché selon tout procédé connu.

Les silices ainsi obtenues sont particulièrement adaptées à l'utilisation comme charge de compositions organosiliciques.

La nature des compositions organosiliciques pouvant après vulcanisation être renforcées par les silices précédemment décrites n'est pas critique. De manière générale, les compositions organosiliciques peuvent être de nature élastomère ou pâteuse.

Dans le cas des compositions élastomères, le polymère organosilicique mis en oeuvre et vulcanisable est tel que désignant par R les radicaux de nature hydrocarbonée liés aux atomes de silicium, le rapport entre le nombre total de radicaux R et le nombre total d'atomes de silicium, est compris entre 0,5 et 3. Dans la constitution du polymère organosilicique, les autres valences disponibles du silicium sont reliées à des hétéro-atomes tels que l'oxygène ou l'azote, ou bien à des radicaux hydrocarbonés multivalents.

Préférentiellement les compositions organosiliciques chargées selon l'invention sont des compositions organopolysiloxaniques dans lesquelles l'organopolysiloxane peut être linéaire ou ramifié, et éventuellement

4

comporter en plus des radicaux hydrocarbonés des groupements réactifs comme par exemple des groupements hydroxyles, des groupements hydrolysables, des groupements alkényle, des atomes d'hydrogène...

Plus précisément, les organopolysiloxanes constituants principaux des compositions selon l'invention sont constitués de motifs siloxaniques de formule générale :

$$R_n \, SiO_{\frac{4-n}{2}} \qquad (I)$$

éventuellement associés à des motifs siloxaniques de formule

$$Z_x \, R_y \, SiO_{\frac{4-x-y}{2}} \qquad (II)$$

Dans ces formules des divers symboles ont la signification suivante :
– R représente un groupement de nature hydrocarbonée non hydrolysable, ce radical pouvant être :
– un radical alcoyle ou halogénoalcoyle ayant de 1 à 5 atomes de carbone et comportant de 1 à 6 atomes de chlore et/ou de fluor.
– des radicaux cycloalcoyles et halogénocycloalcoyles ayant de 3 à 8 atomes de carbone et contenant de 1 à 4 atomes de chlore et/ou de fluor.
– des radicaux aryles, alcoylaryles et halogènoaryles ayant de 6 à 8 atomes de carbone et contenant de 1 à 4 atomes de chlore et/ou de fluor.
– des radicaux cyanoalcoyles ayant de 3 à 4 atomes de carbone.
– Z = un atome d'hydrogène, un groupement alkényle, un groupe hydroxyle, un atome hydrolysable, un groupement hydrolysable.
– n = un nombre entier égal à 0, 1, 2 ou 3
– x = un nombre entier égal à 0, 1, 2 ou 3
– y = un nombre entier inférieur ou égal à 2.
A titre illustratif, on peut citer parmi les radicaux organiques R, directement liés aux atomes de silicium :
Les groupes méthyle ; éthyle ; propyle ; isopropyle ; butyle ; isobutyle ; alpha-pentyle ; t-butyle ; chlorométhyle ; dichlorométhyle ; alpha-chloroéthyle ; alpha, béta-dichloroéthyle ; fluorométhyle ; difluorométhyle ; alpha, béta-difluoroéthyle ; trifluoro-3,3,3 propyle ; trifluoro cyclopropyle ; trifluoro-4,4,4 butyle ; heptafluoro-3,4,4 4,5,5 pentyle ; béta-cyanoéthyle ; gamma-cyanopropyle : phényle ; p-chlorophényle ; m-chlorophényle ; dichloro-3,5 phényle ; trichlorophényle ; tétrachlorophényle ; o-, p-, ou m-tolyle ; alpha,alpha,alpha-trifluorotolyle ; xylyles comme diméthyl-2,3 phényle ; diméthyl-3,4 phényle.

Préférentiellement, les radicaux organiques liés aux atomes de silicium sont des radicaux méthyle, phényle, vinyle, ces radicaux pouvant être éventuellement halogénés ou bien encore des radicaux cyanoalkyle.

Les symboles Z peuvent être des atomes d'hydrogène, des atomes de chlore, des groupements vinyles, des groupements hydroxyles ou des groupements hydrolysables, tels que : amino, amido, aminoxy, oxime, alcoxy, alcoxyalcoxy, alkenyloxy, acyloxy...

La nature de l'organopolysiloxane et donc les rapports entre les motifs siloxaniques (I) et (II) et la répartition de ceux-ci est comme on le sait choisie en fonction de l'application envisagée et en fonction du traitement de vulcanisation qui sera effectué sur la composition.

Il peut ainsi s'agir de compositions vulcanisables à température élevée sous l'action de peroxydes organiques tels que peroxyde de dichloro-2,4 benzoyle, le peroxyde de benzoyle, le perbenzoate de t-butyle, le peroxyde de cumyle, le peroxyde de di-t-butyle...

L'organopolysiloxane entrant dans de telles compositions est alors constitué essentiellement de motifs siloxaniques (I) et ne contient pas de groupes ou d'atomes hydrolysables.

Les polyméthylpolysiloxanes terminés par des groupements triméthylsilyles représentent un exemple particulièrement important de cette catégorie sur le plan industriel.

La vulcanisation peut être également effectuée à température ambiante ou à température modérée par création de réticulations entre des groupements vinylsilylés et des groupements hydrogénosilylés, la réaction d'hydrosilylation étant effectuée en présence de catalyseurs tels que les dérivés du platine... les organopolysiloxanes mis en oeuvre ne contiennent pas alors d'atomes ou de groupements hydrolysables.

La vulcanisation peut être effectuée sous l'action de l'humidité. Les organopolysiloxanes contenus dans les compositions de ce type contiennent des atomes ou des groupements hydrolysables tels que précédemment définis. Les motifs siloxaniques (II) contenant de tels groupements représentent au plus 15% en poids de la masse totale de l'organopolysiloxane mis en oeuvre. Les compositions organopolysiloxaniques de ce type contiennent généralement des catalyseurs tels que les sels d'étain.

La vulcanisation peut enfin être effectuée en présence d'agents de réticulation. Les organopolysiloxanes entrant dans ces compositions sont en général des polysiloxanes linéaires ramifiés ou réticulés constitués de motifs (I) ou (II) dans lesquels Z est un groupement hydroxyle et où x est au moins égal à 1. L'agent de réticulation peut être un silane polyfonctionnel tels que le méthyltriacétoxysilane, l'isopropyltriacétoxysilane, le vinyltriacétoxysilane, le triméthyl (diéthylaminoxy)silane... Divers autres composés tels que les silicates peuvent être utilisés comme agents de réticulation.

Les compositions organosiliciques selon l'invention contiennent de 5 à 50% et de préférence de 10 à 40% de silices de précipitation éventuellement traitées telles que précédemment définies. Dans le cas des pâtes silicones la proportion en silice de l'invention sera généralement comprise entre 3 et 20%.

En outre, en plus des polysiloxanes, de la silice précipitée éventuellement traitée, des agents de réticulation et des catalyseurs de réticulation, les compositions peuvent contenir des charges usuelles telles que du quartz pulvérisé, de la terre de diatomées, du talc, du noir de carbone, du carbonate.... Les compositions peuvent en outre contenir des adjuvants divers usuels comme des agents antistructures, des stabilisants thermiques, des agents thixotropiques, des pigments, des inhibiteurs de corrosion.

Les agents antistructures, connus également sous la dénomination de plastifiants, sont en général de nature organosilicique et sont introduits à raison de 0 à 20 parties pour 100 parties de gomme organosilicique. Ils permettent d'éviter le durcissement des compositions lors du stockage. Parmi les agents antistructures on peut citer les silanes à groupements hydrolysables, ou des huiles diorganopolysiloxaniques hydroxylées ou alcoxylées de faible poids moléculaire. De telles compositions sont par exemple décrites dans le brevet français FR-A-1.111.969.

Parmi les stabilisants thermiques qui sont bien connus de l'homme de l'art on peut citer les sels, les oxydes et les hydroxydes de fer, de cérium ou de manganèse. Ces additifs qui peuvent être utilisés seuls ou en mélange sont en général introduits à raison de 0,01 à 5% par rapport au poids de la gomme organopolysiloxanique mise en oeuvre.

Les compositions organopolysiloxaniques sont préparées en mélangeant les divers ingrédients de la composition tels que précédemment décrits. Le mélange peut être effectué à température ambiante ou à chaud.

Des exemples vont maintenant être donnés.

## EXEMPLE 1

Dans un réacteur de 200 l équipé d'un système de régulation de pH et de température on introduit sous agitation (turbine, 140 t/mn) 60 litres d'eau déionisée et 35 kg de bouillie de silice à 25% en masse de silice.

Le milieu réactionnel est homogénéisé puis la température est portée à 60°C.

On stabilise par la suite le pH du milieu à la valeur 8 par addition d'une solution de soude (200 g/l).

Lorsque le pH est stabilisé, on procède à une addition simultanée de diméthyldichlorosilane pur sous un débit de 113 g/mn pendant 25 mn et de solution de soude (200 g/l) en ajustant le débit de manière à maintenir le pH à la valeur 8.

Le milieu réactionnel est laissé ainsi pendant 1 heure à 60°C puis le pH est abaissé à 6 par un ajout de diméthyldichlorosilane.

On ajoute ensuite au milieu réactionnel 18 l de méthylisobutyl cétone en 10 minutes et sous agitation par hélice MIXEL® à 170 tr/min, ce qui provoque la granulation de la silice. La suspension est filtrée, lavée à l'eau. La silice obtenue est séchée à l'étuve à 90°C sous une pression de 50 mm de Hg pendant 18 heures.

Le produit obtenu se présente sous forme de billes avec les caractéristiques suivantes :

| | |
|---|---|
| Densité : | 0,22, |
| Mouillabilité : | 70%, |
| Reprise en eau : | 3%, |
| Taille moyenne : | 2 mm, |
| Teneur en sodium : | 440 ppm, |
| Surface BET : | 170 m$^2$/g. |

## EXEMPLE 2 :

Dans le même réacteur que dans l'exemple précédent, on introduit 60 litres d'eau déionisée et 35 kg d'une bouillie de silice à 25% en masse de silice.

Le mélange ainsi constitué est homogénéisé sous agitation (140 tr/mn) et à température ambiante.

On ajuste le pH à 4 puis on procède à une addition simultanée de diméthyldichlorosilane avec un débit de 113 g/mn et de solution de NaOH (200 g/l) en ajustant le débit de manière à maintenir le pH à une valeur constante de 4. Ces additions sont maintenues pendant 20 mn.

Le milieu réactionnel est porté à 60°C et on laisse mûrir pendant 20 minutes.

On procède comme dans l'exemple 1 pour la suite des opérations pour.obtenir un produit sous forme de billes avec les caractéristiques suivantes :

| | |
|---|---|
| Densité : | 0,26, |
| Mouillabilité : | 70%, |
| Reprise en eau : | 3%, |
| Taille moyenne : | 2 mm, |
| Teneur en sodium : | 440 ppm, |
| Surface BET : | 170 m$^2$/g. |

## EXEMPLE 3 :

Dans un autoclave de 1 l, on introduit 600 ml d'eau et 150 g de silice précipitée de surface BET de 170 m$^2$/g. On ajoute 30 g de diméthyldiméthoxysilane. On porte à 190°C pendant deux heures. On laisse ensuite refroidir.

On ajoute ensuite 0,35 l d'acétate d'éthyle en 10 minutes sous agitation par hélice MIXEL® à 170 tr/min. ce qui provoque la granulation de la silice. On procède ensuite comme décrit à l'exemple 1.

Le produit obtenu se présente sous forme de bille avec les caractéristiques suivantes :

| | |
|---|---|
| Densité : | 0,22, |
| Mouillabilité : | 45%, |
| Reprise en eau : | 4%, |
| Taille moyenne : | 2 mm, |
| Teneur en sodium : | 200 ppm, |
| BET : | 170 m$^2$/g. |

## EXEMPLE 4 :

Cet exemple concerne les propriétés diélectriques par plaques pour de produits renforcés par une silice selon l'exemple 1 et par une silice de pyrogénation commercialisée par la Société DEGUSSA sous la marque AEROSIL.

### Préparation de la composition organopolysiloxanique

Avec un malaxeur bicylindres de laboratoire, on mélange :
- 50 g d'une gomme polydiméthylsiloxanique,
- 3,6 g d'agent antistructure,
- 20 g de silice.

La gomme polydiméthylsiloxanique est une gomme dévolatilisée renfermant 720 mg de groupement Si par kg et se terminant par des motifs triméthylsiloxy. Sa viscosité à 25° est de 20.10$^6$ centipoises et correspond à une masse en poids de l'ordre de 6.10$^5$.

L'agent antistructure est un polydiméthylsiloxane hydroxylé qui contient 8,3% d'hydroxyle.

Le mélange est réalisé en ajoutant la silice en 5 minutes par portions dans le polymères siloxanique ; le malaxage sur calandre est poursuivi pendant 15 minutes avant d'ajouter à la composition ainsi réalisée 0,25 cm$^3$ de diméthyl-2,5 di(tertiobutylpéroxy)-2,5 hexane. Le mélange complet est alors homogénéisé pendant 5 minutes sur la même calandre.

Le mélange est alors disposé dans un moule conçu pour réaliser des éprouvettes de 2 mm d'épaisseur.

Le moule est préchauffé et la vulcanisation du mélange est ainsi réalisée en 10 minutes à 170°C sous une pression de 120 kg/cm$^2$ (≈120 bars).

Les élastomères sont étudiés en l'état et on mesure sur les échantillons obtenus la résistivité transversale qui tient compte du courant qui passe à travers l'isolant entre les électrodes de mesure et qui est indépendante des dimensions de cet isolant (pour un isolant cette résistivité ρ varie de 10$^2$ à 10$^{16}$ Ω cm environ). La mesure est réalisée suivant la norme NFC 26215.

Les résultats sont les suivants :

7

|  | Aerosil ® | Silice invention |
|---|---|---|
| ℓ ∿ cm $10^{15}$ |  | $8.10^{14}$ |

On voit que la silice de précipitation de l'invention présente en ce qui concerne la résistivité transversale des performances tout-à-fait voisines de celles d'une silice de pyrogénation.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Granulés de silice précipitée hydrophobes présentant les caractéristiques suivantes :

| | |
|---|---|
| Densité : | comprise entre 0,15 et 0,4 |
| Mouillabilité à l'eau : | comprise entre 20% et 80% |
| Reprise en eau : | comprise entre 1,5% et 5% |
| Surface BET : | comprise entre 50 et 350 m²/g |
| Surface CTAB : | comprise entre 40 et 320 m²/g |

lesdits granulés se présentant sous forme de billes sensiblement sphériques, de taille moyenne d'au moins 0,08 mm.

2. Granulés selon la revendication 1 caractérisés en ce qu'ils se présentent sous forme de billes de taille moyenne comprise entre 0,2 et 2 mm.

3. Procédé de préparation de granulés de silice précipitée notamment du type selon l'une quelconque des revendications 1 à 2, caractérisé en ce qu'on met en présence et on mélange sous agitation une suspension aqueuse de silice, un agent d'hydrophobisation et un solvant organique non miscible à l'eau, ce par quoi on obtient une phase liquide et des granulés de silice sous forme de billes, puis on sépare la phase liquide et les granulés ainsi formés et éventuellement on lave et on sèche les granulés.

4. Procédé selon la revendication 3, caractérisé en ce que dans un premier temps on met en présence et on mélange la suspension de silice et l'agent d'hydrophobisation, puis dans un deuxième temps on ajoute le solvant organique au mélange obtenu.

5. Procédé selon la revendication 4, caractérisé en ce qu'on effectue le mélange de la suspension de silice et de l'agent d'hydrophobisation en maintenant constant le pH du mélange.

6. Procédé selon l'une des revendications 3 à 5, caractérisé en ce qu'on utilise comme agent d'hydrophobisation un composé organosilicique.

7. Procédé selon la revendication 6, caractérisé en ce que l'agent d'hydrophobisation est choisi dans le groupe comprenant les alkylchlorosilanes et les alcoxysilanes.

8. Procédé selon une quelconque des revendications 3 à 5, caractérisé en ce que le solvant organique est choisi dans le groupe comprenant les esters et les cétones.

9. Procédé selon la revendication 8, caractérisé en ce que le solvant organique est choisi dans le groupe des cétones aliphatiques.

10. Procédé selon l'une des revendications 3 à 7, caractérisé en ce que le solvant organique est choisi dans le groupe des amines.

11. Procédé de renforcement de compositions organopolysiloxaniques, caractérisé en ce qu'on utilise des granulés selon l'une des revendications 1 à 2 ou obtenus par le procédé selon l'une des revendications 3 à 10.

12. Composition organopolysiloxanique caractérisée en ce qu'elle comprend des granulés de silice selon l'une des revendications 1 à 2 ou obtenus par le procédé selon l'une des revendications 3 à 10.

## Ansprüche

1. Hydrophobe Granulate von gefällter Kieselsäure, die folgende Merkmale aufweisen :

| | |
|---|---|
| Dichte : | zwischen 0,15 und 0,4 |
| Benetzbarkeit mit Wasser : | zwischen 20% und 80% |
| Wiederaufnahme von Wasser : | zwischen 1,5% und 5% |
| BET-Oberfläche : | zwischen 50 und 350 m²/g |
| CTAB-Oberfläche : | zwischen 40 und 320 m²/g |

wobei die Granulate in Form von im wesentlichen kugeligen Teilchen mit einer mittleren Teilchengröße von mindestens 0,08 mm vorliegen.

2. Granulate nach Anspruch 1, dadurch gekennzeichnet, daß sie in Form von Kügelchen mit einer mittleren Teilchengröße von 0,2 bis 2 mm vorliegen.

3. Verfahren zur Herstellung von Granulaten gefällter Kieselsäure vor allem vom Typ nach einem der Ansprüche 1 bis 2, dadurch gekennzeichnet, daß man unter Rühren eine wäßrige Kieselsäuresuspension, ein Hydrophobiermittel und ein mit Wasser nicht mischbares organisches Lösungsmittel zusammenbringt und mischt, wodurch man eine flüssige Phase und Kieselsäuregranulate in Form von Kügelchen erhält, worauf man die flüssige Phase und die so erhaltenen Granulate voneinander trennt und gegebenenfalls die Granulate wäscht und trocknet.

4. Verfahren nach Anspruch 3, dadurch gekennzeichnet, daß man in einer ersten Zeitspanne die Kieselsäuresuspension und das Hydrophobiermittel zusammenbringt und mischt und dann in einer zweiten Zeitspanne dem erhaltenen Gemisch das organische Lösungsmittel zusetzt.

5. Verfahren nach Anspruch 4, dadurch gekennzeichnet, daß man beim Vermischen der Kieselsäuresuspension und des Hydrophobiermittels den pH-Wert des Gemisches konstant hält.

6. Verfahren nach einem der Ansprüche 3 bis 5, dadurch gekennzeichnet, daß man als Hydrophobiermittel eine Organokieselsäureverbindung verwendet.

7. Verfahren nach Anspruch 6, dadurch gekennzeichnet, daß man das Hydrophobiermittel aus der Gruppe umfassend die Alkylchlorsilane und Alkoxysilane auswählt.

8. Verfahren nach einem der Ansprüche 3 bis 5, dadurch gekennzeichnet, daß man das organische Lösungsmittel aus der Gruppe umfassend die Ester und Ketone auswählt.

9. Verfahren nach Anspruch 8, dadurch gekennzeichnet, daß man das organische Lösungsmittel aus der Gruppe der aliphatischen Ketone auswählt.

10. Verfahren nach einem der Ansprüche 3 bis 7, dadurch gekennzeichnet, daß man das organische Lösungsmittel aus der Gruppe der Amine auswählt.

11. Verfahren zum Verstärken von Organopolysiloxan-Massen, dadurch gekennzeichnet, daß man die Granulate nach einem der Ansprüche 1 bis 2 oder erhalten gemäß dem Verfahren nach einem der Ansprüche 3 bis 10 verwendet.

12. Organopolysiloxan-Masse, dadurch gekennzeichnet, daß sie Kieselsäuregranulate nach einem der Ansprüche 1 bis 2 oder erhalten gemäß dem Verfahren nach einem der Ansprüche 3 bis 10 einschließt.


## Claims

1. Water repellent precipitated silica granules having the following characteristics :

| | |
|---|---|
| Density : | between 0.15 and 0.4 |
| Water wetability : | between 20 and 80% |
| Water absorption : | between 1.5 and 5% |
| BET surface : | between 50 and 350 m²/g |
| CTAB surface : | between 40 and 320 m² /g, |

said granules being in the form of substantially spherical balls with an average size of at least 0.08 mm.

2. Granules according to claim 1, characterized in that they are in the form of balls of average size between 0.2 and 2 mm.

3. Process for the preparation of precipitated silica granules, particularly of the type according to either of the claims 1 and 2, characterized in that an aqueous silica suspension, a water repellent and a water-immiscible organic solvent are brought together and mixed accompanied by stirring, which leads to a liquid phase and silica granules in the form of balls, which is followed by the separation of the liquid phase and the thus formed granules and optionally the granules are washed and dried.

4. Process according to claim 3, characterized in that firstly the silica suspension and the water repellent are brought together and mixed and then the organic solvent is added to the mixture obtained.

5. Process according to claim 4, characterized in that the silica suspension and the water repellent are mixed whilst maintaining constant the pH of the mixture.

6. Process according to one of the claims 3 to 5, characterized in that an organosilicic compound is used as the water repellent.

7. Process according to claim 6, characterized in that the water repellent is chosen in the group including alkyl chlorosilanes and alkoxy silanes.

8. Process according to one of the claims 3 to 5, characterized in that the organic solvent is chosen from the group including esters and ketones.

9. Process according to claim 8, characterized in that the organic solvent is chosen in the group of aliphatic ketones.

10. Process according to one of the claims 3 to 7, characterized in that the organic solvent is chosen from the group of amines.

11. Process for reinforcing organopolysiloxane compositions, characterized in that use is made of granules according to one of the claims 1 or 2 or obtained by the process according to one of the claims 3 to 10.

12. Organopolysiloxane composition, characterized in that it comprises silica granules according to one of the claims 1 or 2, or obtained by the process according to one of the claims 3 to 10.